(19) Europäisches Patentamt
European Patent Office
Office européen des brevets

(11) Veröffentlichungsnummer: **0 024 524**
**B1**

# (12) EUROPÄISCHE PATENTSCHRIFT

(45) Veröffentlichungstag der Patentschrift: **23.11.83**

(51) Int. Cl.³: **C 08 G 18/48**, C 08 G 18/14

(21) Anmeldenummer: **80104065.0**

(22) Anmeldetag: **14.07.80**

## (54) Verfahren zur Herstellung von urethanmodifizierten Polyisocyanurat-Hartschäumen und deren Verwendung zur Kälte-/Wärmedämmung.

(30) Priorität: **01.09.79 DE 2935402**

(43) Veröffentlichungstag der Anmeldung: **11.03.81 Patentblatt 81/10**

(45) Bekanntmachung des Hinweises auf die Patenterteilung: **23.11.83 Patentblatt 83/47**

(84) Benannte Vertragsstaaten: **FR GB IT NL**

(56) Entgegenhaltungen: **DE - A - 2 423 993**

(73) Patentinhaber: **CHEMISCHE WERKE HÜLS AG, Postfach 1320, D-4370 Marl 1 (DE)**

(72) Erfinder: **Burzin, Klaus, Dr., Wellerfeldweg 164, D-4370 Marl (DE)**
Erfinder: **Pierk, Rudolf, Riete 12, D-4423 Gescher (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 024 524 B1

ACTORUM AG

# Verfahren zur Herstellung von urethanmodifizierten Polyisocyanurat-Hartschäumen und deren Verwendung zur Kälte-/Wärmedämmung

Gegenstand der Erfindung ist ein Verfahren zur Herstellung von urethanmodifizierten Polyisocyanurat-Hartschäumen durch Umsetzen und Aufschäumen eines Gemisches aus Polyisocyanaten und Ethylenglykol und/oder Polyethylenglykolen in Gegenwart von Treibmitteln, Schaumstabilisatoren und Katalysatoren sowie üblichen Hilfs- und Zusatzstoffen. Ein weiterer Gegenstand der Erfindung ist die Verwendung der so hergestellten Hartschäume zur Kälte-/Wärmedämmung.

Die Herstellung von Hartschaumstoffen mit Isocyanurat- und Urethanbindungen – üblicherweise als urethanmodifizierte Polyisocyanurat-Hartschäume bezeichnet – ist grundsätzlich bekannt.

So wird beispielsweise in den US-A 3 745 133, 3 644 232 und 3 516 950 die Herstellung derartiger Hartschäume durch Umsetzen eines Polyisocyanats in Anwesenheit eines Trimerisierungskatalysators mit unterschüssigen Mengen Polyol in Gegenwart eines Treibmittels und gegebenenfalls weiterer Hilfs- und Zusatzstoffe beschrieben.

Schäume, die nur Isocyanuratgruppen aufweisen, sind spröde und leicht zerreibbar. Für viele Anwendungen, besonders jedoch als Dämmmaterial im Bausektor, sind derartige Schaumstoffe nicht verwendbar. Anderseits besitzen reine Isocyanuratschäume eine hohe Flammfestigkeit und Wärmestabilität.

Eine Möglichkeit, die Polyisocyanuratschäume flexibler zu gestalten, ist der Einbau von Urethangruppen durch zusätzliche Umsetzung mit geeigneten Polyolen. Dabei muss in der Regel ein Absinken der Flammfestigkeit und der Wärmestabilität in Kauf genommen werden.

Für des Ausmass des Absinkens der Flammfestigkeits- und Wärmestabilitätseigenschaften ist sowohl die strukturelle Beschaffenheit als auch die Menge des eingesetzten Polyols verantwortlich.

Berücksichtigt man, dass nach Rubber Chem. Technol., Bd. 9, 461–480 (1966) die Flammfestigkeit von Schaumstoffen auf Polyurethanbasis verbessert wird, wenn die Gewichtsverhältnisse von Wasserstoffgehalt : Kohlenstoffgehalt bzw. Wasserstoff- und Kohlenstoffgehalt : Sauerstoffgehalt in den Ausgangsmaterialien erniedrigt werden und dass ausserdem für polyurethanmodifizierte Hartschäume mit geringem Abrieb der Einsatz von Polyolen mit der Funktionalität = 2 empfohlen wird [Journ. Cellular Plastics, 332–340 (1978)], so sollten von den gewöhnlich auf Polypropylen- bzw. Polyethylenoxidbasis aufgebauten Polyolen Polyethylenglykole bzw. deren Mischungen für die Herstellung flammfester, wärmestabiler Schäume geeignet sein. Mit Polyethylenglykolen modifizierte Isocyanuratschäume werden in Journ. Cellular Plastics, 143–145 (1978) beschrieben.

Ethylenglykol und/oder Polyethylenglykole besitzen jedoch die nachteilige Eigenschaft, dass sie aufgrund ihrer relativ hohen Polarität mit den als Treibmittel eingesetzten niedrigsiedenden halogenierten Kohlenwasserstoffen nur unzureichend mischbar sind. Die Mischbarkeit wird mit zunehmender relativer Molekülmasse des Polyethylenglykols verbessert. So sind Polyethylenglykole mit relativen Molekülmassen $>$ 1000 mit z.B. $CFCL_3$ ausreichend mischbar; die daraus hergestellten Hartschäume sind für die praktische Anwendung zu weich und flexibel und besitzen eine schlechte Dimensionsstabilität.

Darüber hinaus wird die Verträglichkeit der anderen Hilfs- und Zusatzstoffe wie Katalysatoren und Stabilisatoren, die vorteilhaft ebenfalls zusammen mit den Polyolen eingesetzt werden, durch Zugabe des unpolaren Treibmittels vermindert.

Bei der Herstellung polyurethanmodifizierter Polyisocyanurat-Hartschäume können daher Polyethylenglykole nicht wie üblich in Kombination mit dem Treibmittel sowie weiteren Hilfs- und Zusatzstoffen eingesetzt werden, da keine homogenen Mischungen resultieren.

Das technologische Verhalten inhomogener Polyolkomponenten ist unbefriedigend, da nur eine gleichmässige Zusammensetzung der Ausgangsmischung (Polyisocyanat und Polyol) eine hinreichende Reproduzierbarkeit der Schaumeigenschaften bei der üblichen maschinellen Schaumherstellung gewährleistet.

Der Erfindung liegt daher die Aufgabe zugrunde, ein Verfahren zur Herstellung von Isocyanurat- und Urethangruppen enthaltendem Hartschaum unter Einsatz von Kombinationen aus Polyethylenglykolen, Treibmitteln, Schaumstabilisatoren, Katalysatoren und gegebenenfalls weiteren Hilfs- und Zusatzstoffen zu schaffen, dem die aufgeführten Nachteile nicht anhaften.

Die Aufgabe wurde erfindungsgemäss dadurch gelöst, dass in der Ausgangsmischung Verbindungen der allgemeinen Formel I

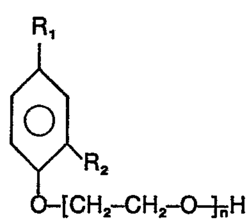

I

enthalten sind, in der $R_1$ und $R_2$ geradkettige oder Verzweigte Alkylgruppen mit 1 bis 12 C-Atomen darstellen und in der n Werte von 5 bis 20 annehmen kann.

Bevorzugt sind solche Verbindungen der allgemeinen Formel I, in der $R_1$ und $R_2$ Alkylgruppen mit 4 bis 9 C-Atomen darstellen. Bevorzugte Werte für n liegen im Bereich von 8 bis 16.

Die Herstellung der Verbindungen der allgemeinen Formel I ist z.B. in N. Schönfeld, Grenzflächenaktive Ethylenoxidaddukte – Wiss. Verlagsgesellschaft, Stuttgart (1976) – Seiten 63 bis 67, beschrieben.

Das Gewichtsverhältnis Ethylenglykol und/oder Polyethylenglykol zu den Verbindungen der allgemeinen Formel I liegt im Bereich von 10 : 1 bis 1 : 1, vorzugsweise 5 : 1 bis 5 : 4.

Um die Einsatzmenge an Verbindungen der allgemeinen Formel I in der Gesamtmischung möglichst niedrig zu halten, hat es sich als vorteilhaft erwiesen, den Oxethylierungsgrad möglichst hoch zu wählen. Insbesondere hat sich diese Massnahme bewährt, je kleiner die relative Molekülmasse der eingesetzten Polyole ist. Anderseits ist zu berücksichtigen, dass mit steigendem Oxethylierungsgrad der erfindungsgemässen Verbindungen ihre Löslichkeit in der Polyolkomponente abnimmt.

Zur Durchführung des erfindungsgemässen Verfahrens werden bevorzugt aromatische Polyisocyanate eingesetzt. Beispiele hierfür sind: p- und m-Phenylen-diisocyanat, Polymethylen-polyphenylisocyanat, 2,4- und 2,6-Toluol-diisocyanat, Naphthalen-1,4-diisocyanat, Diphenylen-4,4'-diisocyanat, Bis-(4-isocyanatophenyl)-methan, Bis-(3-methyl-4-isocyanatophenyl)-methan und 4,4'-Diphenylpropan-diisocyanat.

Bei dem erfindungsgemässen Verfahren sind insbesondere methylenbrückenhaltige Polyphenyl/Polyisocyanat-Gemische bevorzugt. Die Herstellung dieser Gemische ist z.B. in US-PS 2 683 730, 2 950 263, 3 012 008, 3 344 162, 3 362 979, 3 793 362 und 3 745 133 beschrieben.

Als Ethylenglykol und/oder Polyethylenglykole werden Produkte mit einer durchschnittlichen relativen Molekülmasse von 62 bis 800, vorzugsweise 200 bis 600, eingesetzt.

Pro Äquivalent Isocyanat werden Ethylenglykol und/oder Polyethylenglykole in einer Menge von 0,01 bis 0,5, vorzugsweise 0,1 bis 0,3, Äquivalenten eingesetzt.

Entsprechend der bekannten Schäumtechnologie werden als Treibmittel niedrigsiedende halogenierte Kohlenwasserstoffe bzw. deren Gemische, hauptsächlich Trichlorfluormethan, verwendet. Das Treibmittel wird üblicherweise in Mengen von 5 bis 50%, vorzugsweise von 15 bis 25%, bezogen auf die Ausgangsmischung, eingesetzt.

Als Schaumstabilisatoren setzt man gewöhnlich Produkte auf Silikonbasis ein, wie sie z.B. in US-PS 2 834 748, 2 917 480 und 3 629 308 beschrieben sind. Neuerdings werden auch Polymerisate von N-Vinylpyrrolidon bzw. N-Vinylpyrrolidon mit Dibutylmaleat und Vinylacetat in einem Medium von polyfunktionellen Polyetherpolyolen, wie sie in der US-PS 3 746 663 beschrieben sind, benutzt.

Für die Trimerisierungsreaktion der Polyisocyanate zu Polyisocyanuraten bzw. für die partielle Umsetzung von Polyisocyanaten und Polyolen zu Polyurethanen kommen eine Vielzahl von Katalysatoren und Katalysatorkombinationen in Frage. Geeignete Katalysatoren bzw. Katalysatormischungen sind beispielsweise in US-PS 3 892 687, 3 896 052 und 3 903 018 angegeben. Diese Katalysatoren sind in der Ausgangsmischung zu 0,1 bis 5,0%, vorzugsweise 0,5 bis 3,0%, enthalten.

Üblicherweise können weitere Hilfs- und Zusatzstoffe wie Flammschutzmittel, Pigmente, Farbstoffe, Stabilisatoren gegen Alterungs- und Witterungseinflüsse, Weichmacher und fungistatisch bzw. bakteriostatisch wirkende Substanzen sowie Füllstoffe, wie wasserhaltiges Aluminiumoxid, verschiedene Tone und Kalke, Bariumsulfat, Russ u.a. mitverwendet werden. Einzelheiten über Einsatz und Wirkungsweise derartiger Zusatzmittel sind in Kunststoff-Handbuch, Band VII, Carl Hanser-Verlag, München (1966), Seiten 103 bis 113, erläutert.

Zur Herstellung der urethanmodifizierten Isocyanuratschäume werden die Polyisocyanate mit einer homogenen Mischung aus Polyethylenglykol, Treibmittel, Verbindungen der allgemeinen Formel I, Katalysator, Schaumstabilisator und gegebenenfalls weiteren Hilfs- und Zusatzstoffen durch intensives Vermischen zur Reaktion gebracht, wobei in der Regel maschinelle Einrichtungen eingesetzt werden, wie sie z.B. in US-PS 2 764 565 beschrieben sind.

Einzelheiten über Verarbeitungsmaschinen sind aus Kunststoff-Handbuch, Band VII, Carl Hanser-Verlag, München (1966), Seiten 121 bis 205, bekannt.

Nach dem erfindungsgemässen Verfahren lassen sich zähe, abriebfeste, wärmestabile sowie flammfeste Schaumstoffe herstellen. Die zum Stand der Technik geschilderten Entmischungsprobleme in der Ausgangsmischung sowie die daher resultierenden Schäume mit einer inhomogenen Struktur können vermieden werden.

Die erfindungsgemäss erhaltenen polyurethanmodifizierten Polyisocyanurat-Schaumstoffe werden insbesondere als Isoliermaterial in der Bauindustrie eingesetzt. Sie können auch auf dem technischen Sektor als Konstruktionsmaterial sowie in der Möbelindustrie Verwendung finden.

Beispiele

Die Schaumstoffherstellung erfolgte durch intensives Vermischen der Polyolkomponente – bestehend aus Polyethylenglykolen, $CFCl_3$ und ethoxylierten Alkylphenolen sowie weiteren Hilfs- und Zusatzstoffen wie Katalysator, Schaumstabilisator und gegebenenfalls Flammschutzmittel – mit rohem Diphenylmethandiisocyanat unter Zuhilfenahme eines Hochgeschwindigkeitsrührers. Die jeweilige Mischung liess man anschliessend in einem Pappbecher frei aufschäumen.

Zusammensetzung der Ausgangsmischung sowie deren Eigenschaften sind in Tabelle 1 bzw. 2 zusammengestellt. Die Eigenschaften der erhaltenen Hartschaumstoffe werden in Tabelle 3 wiedergegeben.

Tabelle 1
Zusammensetzung der Ausgangsmischung

| Beispiel | | 1 | 2 | 3 | 4 | 5 | 6 | 7 | 8 | 9 | 10 |
|---|---|---|---|---|---|---|---|---|---|---|---|
| Polyethylenglykol* | | | | | | | | | | | |
| Mischung | A | 28,5 | – | – | – | – | – | – | – | – | – |
| | B | – | 17,3 | – | – | – | – | – | – | – | 17,3 |
| | C | – | – | 22,8 | – | – | – | – | – | – | – |
| | D | – | – | – | 22,9 | – | – | – | – | – | – |
| | E | – | – | – | – | 10,0 | – | – | – | – | – |
| | F | – | – | – | – | – | 12,8 | – | – | – | – |
| | G | – | – | – | – | – | – | 15,7 | – | – | – |
| | H | – | – | – | – | – | – | – | 21,2 | – | – |
| | K | – | – | – | – | – | – | – | – | 17,2 | – |
| $CFCl_3$ | | 19,3 | 19,3 | 19,3 | 19,3 | 19,3 | 19,3 | 19,3 | 19,3 | 19,3 | 19,3 |
| Alkylphenol** | I | 3,8 | 4,5 | – | – | 8 | 5,6 | – | – | 6,5 | 6,5 |
| | II | – | – | – | – | – | – | 4,5 | 2,7 | – | – |
| | III | – | – | 2,2 | 2,4 | – | – | – | – | – | – |
| IMR 2*** | | 0,6 | 0,6 | 0,6 | 0,6 | 0,6 | 0,6 | 0,6 | 0,6 | 0,6 | 0,6 |
| LK 221*** | | 0,3 | 0,3 | 0,3 | 0,3 | 0,3 | – | – | 0,3 | – | 0,3 |
| DC 193*** | | – | – | – | – | – | 0,3 | 0,3 | – | 0,3 | – |
| TCEP*** | | – | – | – | – | – | – | – | – | 9,0 | 9,0 |
| MDI*** | | 76,5 | 76,5 | 76,5 | 76,5 | 76,5 | 76,5 | 76,5 | 76,5 | 76,5 | 76,5 |

* Polyethylenglykol (PEG) – mittlere Molekülmasse in Klammern

| Mischung (Gewichtsverhältnis) | | | |
|---|---|---|---|
| | A: PEG (400) und PEG (600) | = | 11,5 : 17,0 |
| | B: PEG (20) und PEG (400) | = | 5,8 : 11,5 |
| | C: PEG (200) und PEG (600) | = | 5,8 : 17,0 |
| | D: PEG (200), PEG (400) und PEG (600) | = | 3,9 : 7,7 : 11,3 |
| | E: Triethylenglykol und PEG (200) | = | 4,2 : 5,8 |
| | F: Triethylenglykol und PEG (300) | = | 4,2 : 8,6 |
| | G: Triethylenglykol und PEG (400) | = | 4,2 : 11,5 |
| | H: Triethylenglykol und PEG (600) | = | 4,2 : 17,0 |
| | K: PEG (300) | | |

** Alkylphenol
I : ethoxyliertes 4-Isononylphenol (Ethoxylierungsgrad = 12)
II : ethoxyliertes 4-tert.-Butylphenol (Ethoxylierungsgrad = 16)
III: ethoxyliertes 2,4-Diisononylphenol (Ethoxylierungsgrad = 16)

*** TMR-2 :Trimerisierungskatalysatorgemisch (DABCO® TMR-2)
LK 221 :Schaumstabilisator (N-Vinylpyrrolidonbasis)
DC 193: Schaumstabilisator (Polyalkylsiloxan/Polyoxalkylen-Copolymerisat)
TCEP : Trichlorethylphosphat
MDI : rohes Diphenylmethandiisocyanat

Die in der Tabelle 1 angegebenen Mengen sind Gewichtsteile

Tabelle 2
Eigenschaften der Ausgangsmischung

| Beispiel | 1 | 2 | 3 | 4 | 5 | 6 | 7 | 8 | 9 | 10 |
|---|---|---|---|---|---|---|---|---|---|---|
| Mischzeit [s] | 10 | 10 | 10 | 10 | 10 | 10 | 10 | 10 | 10 | 10 |
| Startzeit [s] | 16 | 17 | 15 | 15 | 18 | 17 | 16 | 16 | 17 | 17 |
| Steigzeit [s] | 35 | 38 | 32 | 38 | 46 | 46 | 47 | 46 | 39 | 37 |
| Maximale Reaktionstemperatur [°C] | 139 | 140 | 142 | 148 | 150 | 148 | 150 | 149 | 149 | 149 |

Tabelle 3
Eigenschaften der Hartschaumstoffe

| Beispiel | 1 | 2 | 3 | 4 | 5 |
|---|---|---|---|---|---|
| Rohdichte[1] [g/$cm^3$] | 0,031 | 0,029 | 0,032 | 0,030 | 0,029 |
| Druckfestigkeit[2] [N/$mm^2$] | | | | | |
| in Aufschäumrichtung | 1,68 | 1,72 | 1,74 | 1,69 | 1,78 |
| quer zur Aufschäumrichtung | 0,84 | 0,82 | 0,82 | 0,78 | 0,92 |
| Dimensionsstabilität $\Delta V^3$[%] | | | | | |
| (−30°C/+100°C) | 1/2 | 1/4 | 1/3 | 1%4 | <1/2 |
| Abrieb[4] (nach 10 min) [%] | 8,8 | 12,4 | 12,9 | 9,2 | 14,3 |
| Wärmeleitfähigkeit[5] $[\frac{W}{m \cdot K}]$ | 0,0216 | 0,0214 | 0,0206 | 0,0198 | 0,0210 |
| Sauerstoffindex[6] (LOI-Wert) | 25,5 | 24,8 | 24,6 | 25,2 | 24,8 |
| Rauchdichte[7] | | | | | |
| (schwelend/flammend) | 40/75 | 41/76 | 43/75 | 43/72 | 43/68 |

| Beispiel | 6 | 7 | 8 | 9 | 10 |
|---|---|---|---|---|---|
| Rohdichte[1] [g/$cm^3$] | 0,033 | 0,032 | 0,029 | 0,028 | 0,029 |
| Druckfestigkeit[2] [N/$mm^2$] | | | | | |
| in Aufschäumrichtung | 1,72 | 1,68 | 1,60 | 1,65 | 1,67 |
| quer zur Aufschäumrichtung | 0,91 | 0,88 | 0,88 | 0,92 | 0,72 |
| Dimensionsstabilität $\Delta V^3$ [%] | | | | | |
| (−30°C/+100°C) | <1/2 | <1/2 | <1/2 | <1/1 | <1/1 |
| Abrieb[4] (nach 10 min) [%] | 17,2 | 14,3 | 15,7 | 17,3 | 16,8 |
| Wärmeleitfähigkeit[5] $\frac{W}{m \cdot K}$ | 0,0201 | 0,0192 | 0,0206 | 0,0223 | 0,0234 |
| Sauerstoffindex[6] (LOI-Wert) | 24,4 | 24,1 | 25,3 | 26,5 | 26,3 |
| Rauchdichte[7] | | | | | |
| (schwelend/flammend) | 98/60 | 35/68 | 36/65 | 43/75 | 42/76 |

[1] Rohdichte DIN 53 420
[2] Druckfestigkeit DIN 53 421
[3] Dimensionsstabilität DIN 53 431
[4] Abrieb ASTM C-421
[6] Sauerstoffindex ASTM D-2863
[7] Rauchdichte NBS-Kammer
[5] Wärmeleitfähigkeit DIN 52 612

**Patentansprüche**

1. Verfahren zur Herstellung von urethanmodifizierten Polyisocyanurat-Hartschäumen durch Umsetzung eines Gemisches aus Polyisocyanaten und Ethylenglykol und/oder Polyethylenglykolen mit einer relativen Molekülmasse von 62 bis 800 in einer Menge von 0,01 bis 0,5 Äquivalent pro Äquivalent Polyisocyanat in Gegenwart von Treibmitteln, Schaumstabilisatoren und 0,1 bis 5%, bezogen auf die Ausgangsmischung, Isocyanattrimerisierungskatalysatoren sowie üblichen Hilfs- und Zusatzstoffen, dadurch gekennzeichnet, dass man der Ausgangsmischung zusätzlich Verbindungen der allgemeinen Formel (I)

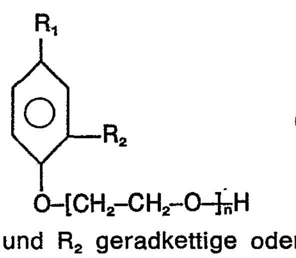

(I)

in der $R_1$ und $R_2$ geradkettige oder verzweigte Alkylgruppen mit 1 bis 12 Kohlenstoffatomen darstellen und in der n eine Zahl von 5 bis 20 ist, oder ethoxyliertes 4-Isononylphenol (Ethoxylierungsgrad = 12) oder ethoxyliertes 4-tert.-Butylphenol (Ethoxylierungsgrad = 16) in einer Menge zusetzt, dass in der Ausgangsmischung das Gewichtsverhältnis von Ethylenglykol und/oder Polyethylenglykolen zu den Verbindungen der allgemeinen Formel (I) im Bereich von 10 : 1 bis 1 : 1, zu dem ethoxylierten 4-Isononylphenol im Bereich von 7,5 : 1 bis 1,25 : 1 und zu dem ethoxylierten 4-tert.-Butylphenol im Bereich von 7,85 : 1 bis 3,49 : 1 liegt.

2. Verfahren nach Anspruch 1,dadurch gekennzeichnet, dass in der Ausgangsmischung Verbindungen der allgemeinen Formel I enthalten sind, in der die Alkylgruppen 4 bis 9 C-Atome enthalten.

3. Verfahren nach Ansprüchen 1 und 2, dadurch gekennzeichnet, dass in der Ausgangsmischung Verbindungen der allgemeinen Formel I enthalten sind, in der n Werte von 8 bis 16 annehmen kann.

4. Verfahren nach den Ansprüchen 1 bis 3, dadurch gekennzeichnet, dass in der Ausgangsmischung das Gewichtsverhältnis von Ethylenglykol und/oder Polyethylenglykolen zu den Verbindungen der allgemeinen Formel I im Bereich von 5 : 1 bis 5 : 4 liegt.

5. Verwendung der gemäss den Ansprüchen 1 bis 4 hergestellten Hartschäume zur Kälte-/Wärmedämmung.

**Claims**

1. A process for the production of a urethane-modified rigid polyisocyanurate foam by reaction of a mixture of a polyisocyanate and ethylene glycol, and/or a polyethylene glycol having a relative molecular mass of 62 to 800, in an amount of 0.01 to 0.5 equivalent per equivalent of polyisocyanate, in the presence of a blowing agent, a foam stabiliser and 0.1 to 0.5%, based on the starting mixture, of an isocyanate trimerisation catalyst as well as conventional assistants and additives, characterised in that the starting mixture contains an additional compound selected from compounds of the general formula

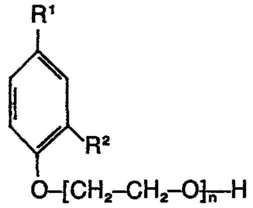 I

where $R^1$ and $R^2$ are linear or branched alkyl of 1 to 12 carbon atoms and n is a number from 5 to 20, oxyethylated 4-isononylphenol (degree of oxyethylation = 12) and oxyethylated 4-tert.butylphenol (degree of oxyethylation = 16), in an amount such that the weight ratio of ethylene glycol and/or polyethyleneglycol to the additional compound in the starting mixture is from 10 : 1 to 1 : 1 in the case of a compound of the general formula I, from 7.5 : 1 to 2.5 : 1 in the case of oxyethylated 4-isononylphenol and from 7.85 : 1 to 3.49 : 1 in the case of oxyethylated 4-tert.butyl(phenol).

2. A process according to claim 1, characterised in that a compound of the general formula I in which the alkyl groups have 4 to 9 carbon atoms is present in the starting mixture.

3. A process according to claims 1 and 2, characterised in that a compound of the general formula I in which n is a number from 8 to 16 is present in the starting mixture.

4. A process according to any of claims 1 to 3, characterised in that the weight ratio of ethylene glycol and/or polyethylene glycol to the additional compound in the starting mixture is from 5 : 1 to 5 : 4 and the additional compound is a compound of the general formula I.

5. The use of a rigid foam produced according to any of claims 1 to 4 for insulation against heat or cold.

**Revendications**

1. Procédé de fabrication de matières alvéolaires dures de poly-isocyanurate modifiées par l'uréthanne, par réaction d'un mélange de poly-isocyanates et d'éthylène-glycol et/ou de poly-éthylène-glycols ayant une masse moléculaire relative de 62 à 800, à raison de 0,01 à 0,5 équivalent par équivalent de poly-isocyanate, en présente de porogènes, de stabilisants de mousse et de 0,1 à 5% de catalyseurs de trimérisation d'isocyanates, relativement au mélange initial, ainsi que d'adjuvants et additifs usuels, caractérisé par le fait que l'on ajoute en outre, au mélange initial, des composés de la formule générale (I)

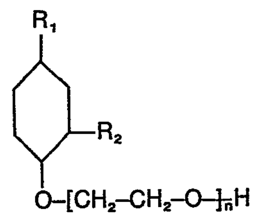 (I),

dans laquelle $R_1$ et $R_2$ représentent des groupes alkyle à chaîne droite ou ramifiés comportant de 1 à 12 atomes de carbone et n est un nombre de 5 à 20, ou du 4-isononyl-phénol éthoxylé (degré d'éthoxylation = 12) ou du 4-tertiobutylphénol éthoxylé (degré d'éthoxylation = 16), en quantité telle que dans le mélange initial, le rapport de poids de l'éthylèneglycol et/ou des polyéthylène-glycols aux composés de la formule générale (I) se situe entre 10 : 1 et 1 : 1, le rapport au 4-isononyl-phénol éthoxylé entre 7,5 : 1 et 1,25 : 1 et le rapport au 4-tertio-butyl-phénol éthoxylé entre 7,85 : 1 et 3,49 : 1.

2. Procédé selon la revendication 1, caractérisé par le fait que le mélange initial contient des composés de la formule générale (I), dans laquelle les groupes alkyle contiennent de 4 à 9 atomes de carbone.

3. Procédé selon les revendications 1 et 2, caractérisé par le fait que le mélange initial contient des composés de la formule générale (I), dans laquelle n peut prendre des valeurs de 8 à 16.

4. Procédé selon les revendications 1 à 3, caractérisé par le fait que dans le mélange initial, le rapport de poids de l'éthylène-glycol et/ou des poly-éthylène-glycols aux composés de la formule générale (I) se situe entre 5 : 1 et 5 : 4.

5. Utilisation des matières alvéolaires dures, fabriquées selon les revendications 1 à 4, pour l'isolation vis-à-vis du froid ou de la chaleur.